# EUROPEAN PATENT APPLICATION

(11) **EP 3 401 136 A1**
(43) Date of publication of application: **14.11.2018**
(21) Application number: 18169871.3
(22) Date of filing: 27.04.2018
(51) Int. Cl.: B60H 1/34, F24F 13/14, F24F 13/15

(54) **AIR DISTRIBUTION DEVICE TO CONTROL THE DIFFUSION OF AN AIR FLOW**

(30) Priority: 03.05.2017 IT 201700047506
(71) Applicant: DENSO THERMAL SYSTEMS S.p.A., 10046 Poirino (Torino) (IT)
(72) Inventor: PILUTTI, Paolo, 10046 Poirino (Torino) (IT)
(74) Representative: Vanzini, Christian

(57) **Abstract**

Air distribution device, comprising an air distribution passage (13) adapted to be supplied with an air flow and provided with an air inlet (14) and an air outlet (15), and a baffle deflecting unit arranged between the air inlet (14) and the air outlet (15) to direct the air flow at the air outlet (15).

The deflecting unit comprises an orientable flap (21) arranged hinged to about a first rotation axis (x), and a plurality of orientable louver elements (23) arranged hinged about respective second rotation axes (y) parallel and co-planar to each other, which extend orthogonally to the first rotation axis (x) when viewed orthogonally to the plane in which the second rotation axes (y) lie, wherein each louver element (23) has a respective window (26) and the flap (21) extends through the windows (26) of the louver elements (23).

## Description

The present invention relates in general to air distribution devices, in particular for air conditioning units of motor vehicles.

In particular, the invention relates to a device of the type comprising a box comprising a pair of opposed first walls, and a pair of opposed second walls arranged orthogonally to the first walls, an air distribution passage formed into the box and adapted to be supplied with an air flow and provided with an air inlet and an air outlet, and deflecting means arranged between the air inlet and the air outlet to orientate the air flow at the air outlet.

An example of a device of this type consists of air distribution devices which are conventionally arranged on the dashboards of the motor vehicles and used to orientate the flow of air which is diffused in the passenger compartment of the motor vehicle. Typically, such devices comprise a set of flaps and louver elements for controlling the direction of the airflow which is distributed through the air outlet of the device.

An object of the present invention is to provide an air distribution device which is relatively simpler than known ones, in which the number of moving parts to be controlled is as small as possible.

To this end, the object of the invention is a device of the type defined at the beginning, wherein said deflecting means comprise an orientable flap arranged hinged to the second walls about a first rotation axis, and a plurality of orientable louver elements arranged hinged to the first walls about respective second rotation axes parallel and co-planar to each other, which extend orthogonally to the first rotation axis when viewed orthogonally to the plane in which the second rotation axes lie, wherein each louver element has a respective window and the flap extends through the windows of the louver elements.

According to the invention, it is possible to control the air flow in two orthogonal directions, through a flap and a plurality of louver elements assembled in a single group.

While the invention has been conceived for the automotive sector, it is clear that it can be applied in any field to control the distribution of an air flow in two orthogonal directions.

Further features and advantages of the device according to the invention will become apparent from the following detailed description of an embodiment of the invention, made with reference to the accompanying drawings, provided for illustrative and non-limiting purposes only, in which
figure 1 is a perspective view of an air distribution device according to the invention;
figure 2 is a sectional view of the device in figure 1;
figure 3 shows the device in the section of figure 2, in different operating positions; and
figure 4 shows a flap and louver elements of the device in a section orthogonal to that in figure 2, in different operating positions.

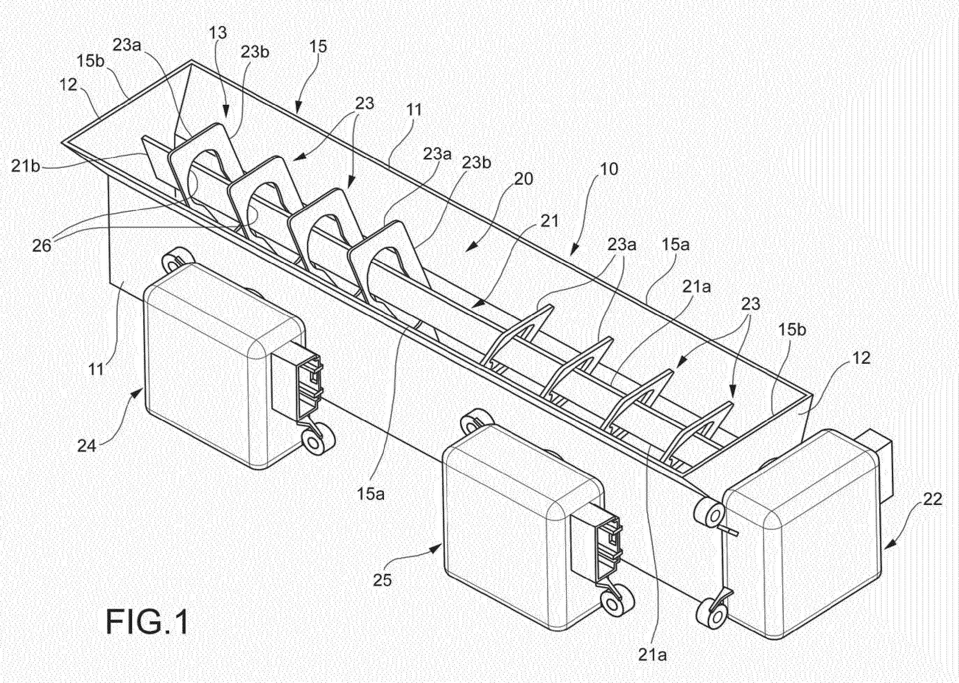

Figure 1 shows a box 10 of plastic material, which can for example be connected to an air conditioning unit of a motor vehicle.

The box 10 comprises a pair of first opposed walls 11, and a pair of second opposed walls 12 arranged orthogonally to the first walls 11.

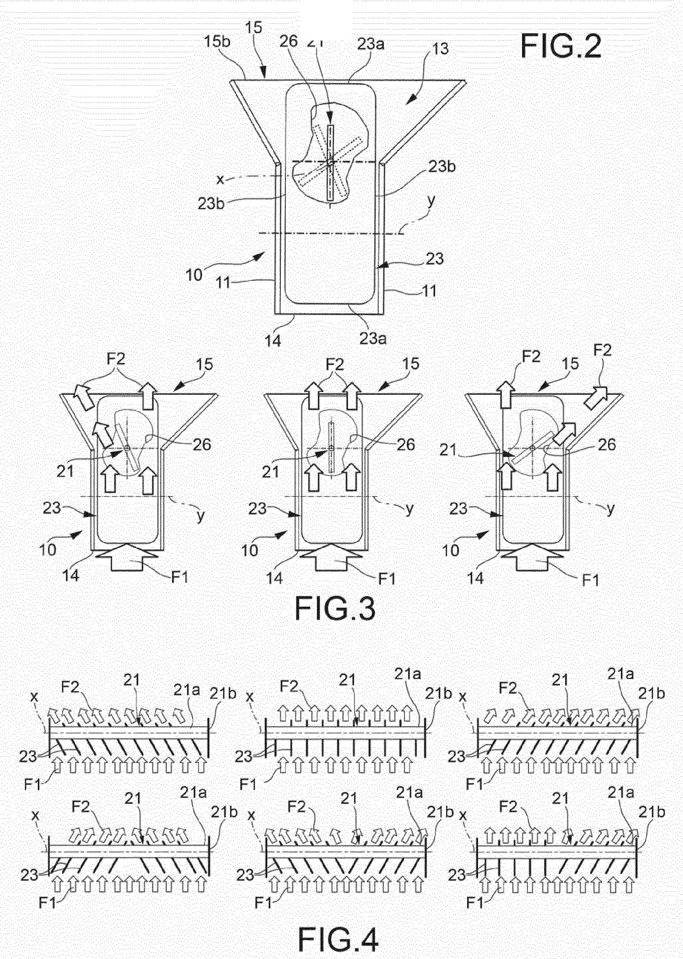

With reference also to figures 2-4, inside the box 10 there is provided an air distribution passage 13 adapted to be supplied with an air flow F1 and provided with an air inlet 14 and an air outlet 15. In particular, the air outlet 15 has a substantially rectangular cross section having a pair of long sides 15a and a pair of short sides 15b orthogonal to the first.

Between the air inlet 14 and the air outlet 15, a deflecting unit 20 is arranged to direct the air flow at the air outlet 15.

The deflecting unit 20 comprises an orientable flap 21 of plastic material, arranged hinged about a first rotation axis x which extends parallel to the long side 15a of the air outlet 15. For example, the flap 21 may be provided with end pins (not shown) mounted rotatable on the second walls 12 of the box 10. The flap 21 is associated with a driving system of a type known per se, for example an actuator 22 whose output shaft (not shown) is directly or indirectly connected (for example by gears) to the flap 21 for moving the latter.

The flap 21 has the shape of a substantially rectangular plate, having a pair of opposed long sides 21a and a pair of opposed short sides 21b orthogonal to the first. The first rotation axis x, or the rotation axis of the flap 21, extends parallel to the long side 21a and intersects the short side 21b of the flap 21.

The deflecting unit 20 further comprises a plurality of orientable louver elements 23 of plastic material, arranged hinged about respective second rotation axes y parallel and coplanar with each other. The second rotation axes y extend orthogonally to the first rotation axis x, when viewed in a direction orthogonal to the plane in which the second rotation axes y lie. The second rotation axes y extend parallel to the short side 15b of the air outlet 15. For example, each of the louver elements 23 may be provided with end pins (not shown) mounted rotatable on the first walls 11 of the box 10. A driving system of a type known per se is associated with the louver elements 23. In the example shown there are two arrays of louver elements 23. As can be seen in figure 4, the louver elements 23 of each array are rotatable integral with each other, and the louver elements 23 of an array can be rotated independently of the louver elements 23 of the other array. This can be achieved for example with a pair of actuators 24 and 25, whose output shafts (not shown) are directly or indirectly connected to one or the other array for moving them. In order to obtain the integral rotation of the louver elements 23 inside the single array, it can be provided that the louver elements are connected to each other, for example by means of a joint or a rack.

Each of the louver elements 23 has the shape of a substantially rectangular plate, having a pair of opposed short sides 23a ha and a pair of opposed long sides 23b orthogonal to the first. Each second rotation axis y, or the respective rotation axis of each louver element 23, extends parallel to the short side 23a and intersects the long side 23b of the louver element 23.

A respective window 26 is obtained through each louver element 23. The flap 21 extends through the windows 26 of the louver elements 23. As can be seen in figure 2, the window 26 of each louver element 23 is arranged in such a way that the rotation axis y of the respective louver element 23 is non-intersecting the perimeter of the window 26. The windows 26 are shaped to prevent any interference between any of the possible positions of the flap 21 and any of the possible positions of the louver elements 23. In particular, the window 26 of each louver element 23 has a bilobed shape.

Figure 3 shows some possible positions of the flap 21, and the consequent distribution of the air flow F2 at the outlet of the air distribution device, in a parallel plane passing through the rotation axis y of one of the louver elements 23.

Figure 4 shows some possible positions of the louver elements 23, and the consequent distribution of the air flow F2 at the outlet of the air distribution device, in a parallel plane passing through the rotation axis x of the flap 21.

It is understood that the invention is not limited to the embodiments described and illustrated herein, but is instead susceptible of modifications relating to the shape and arrangement of parts, constructional and operating details, according to the numerous possible variants which will appear suitable to the man skilled in the art and which are to be understood as included in the scope of the invention, as defined by the following claims.

## Claims

1. An air distribution device comprising a box (10) comprising a pair of opposed first walls (11), and a pair of opposed second walls (12) arranged orthogonally to the first walls (11), an air distribution passage (13) formed into the box (10) and adapted to be supplied with an air flow and provided with an air inlet (14) and an air outlet (15), and deflecting means arranged between the air inlet (14) and the air outlet (15) to orientate the air flow at the air outlet (15);
**characterized in that** said deflecting means comprise an orientable flap (21) arranged hinged to the second walls (12) about a first rotation axis (x), and a plurality of orientable louver elements (23) arranged hinged to the first walls (11), about respective second rotation axes (y) parallel and co-planar to each other, which extend orthogonally to the first rotation axis (x) when viewed orthogonally to the plane in which the second rotation axes (y) lie, wherein each louver element (23) has a respective window (26) and the flap (21) extends through the windows (26) of the louver elements (23).

2. A device according to claim 1, wherein the plurality of louver elements (23) comprises a first and a second array of louver elements (23), wherein the louver elements (23) of each array are rotatable integrally with each other, the louver elements (23) of the first array being rotatable independently from the louver elements (23) of the second array.

3. A device according to any of the preceding claims, wherein the flap (21) is of substantially rectangular shape, having a long side (21a) and a short side (21b), the first rotation axis (x) extending parallel to the long side (21a) and intersecting the short side (21b) of the flap (21), and wherein each of louver elements (23) is of substantially rectangular shape, having a short side (23a) and a long side (23b), the respective second rotation axis (y) extending parallel to the short side (23a) and intersecting the long side (23b) of the louver element (23).

4. A device according to any of the preceding claims, wherein the window (26) of each louver element (23) is of bilobed shape.

5. A device according to any of the preceding claims, wherein the window (26) of each louver element (23) is arranged in such a way that the rotation axis (y) of the respective louver element (23) is non-intersecting the perimeter of the window (26).

6. A device according to any of the preceding claims, wherein the air outlet (15) has a substantially rectangular cross-section having a long side (15a) and a short side (15b), wherein the first rotation axis (x) is arranged parallel to the long side (15a) of the air outlet (15).
